# EUROPEAN PATENT APPLICATION

(11) **EP 3 176 467 A1**
(43) Date of publication of application: **07.06.2017**
(21) Application number: 15827996.8
(22) Date of filing: 16.07.2015
(51) Int. Cl.: F16H 9/18, F16C 19/06, F16C 19/18, F16H 25/22, F16H 25/24

(54) **ACTUATOR FOR CONTINUOUSLY VARIABLE TRANSMISSION, AND CONTINUOUSLY VARIABLE TRANSMISSION**

(30) Priority: 31.07.2014 JP 2014155948
(71) Applicant: NTN Corporation, Osaka-shi, Osaka 550-0003 (JP)
(72) Inventor: AKAISHI Kazuya, Iwata-shi Shizuoka 438-8510 (JP); NAKAYAMA Mitsuhiro, Iwata-shi Shizuoka 438-8510 (JP); KAWAI Toshiki, Iwata-shi Shizuoka 438-8510 (JP); INAMASU Kazunori, Iwata-shi Shizuoka 438-8510 (JP)
(74) Representative: Grünecker Patent- und Rechtsanwälte PartG mbB
(86) International application number: PCT/JP2015/070400
(87) International publication number: WO 2016/017437

(57) **Abstract**

An actuator (5) for a continuously variable transmission is provided which is simple in structure, easy to assemble and disassemble, and can be stably operated for a prolonged period of time. The actuator (5) includes a ball-screw shaft (21a) which rotates about its axis under the driving force of a motor (10), a ball-screw nut (23a) provided at the ball-screw shaft (21a), and axially displaced when the ball-screw shaft (21a) rotates, a coupling member (24) mounted to the ball-screw nut (23a), a guide member (27) which axially guides the coupling member (24), while preventing rotation of the coupling member (24) about its axis, and an arm (29) fixed to the coupling member (24), and biasing the movable sieve (4) toward the fixed sieve (3).

## Description

### TECHNICAL FIELD

This invention relates to an actuator for use in a continuously variable transmission used in a vehicle such as a small motorcycle, and such a continuously variable transmission.

### BACKGROUND ART

A continuously variable transmission includes a driving pulley, a driven pulley, and a transmission belt trained around the driving pulley and the driven pulley, and is configured such that the speed ratio changes continuously by changing the distance between the fixed sieve and the movable sieve forming each pulley, thereby continuously changing the diameters of the portions of the transmission belt wound around the respective pulleys.

In order to move the movable sieve toward and away from the fixed sieve, the below-identified Patent document 1 proposes to use a centrifugal roller type driving mechanism configured, as shown e.g., in Fig. 3 of Patent document 1, such that when the rotation of the output shaft increases, the centrifugal roller 3 moves outwardly under the centrifugal force, thereby pressing the clutch plate 8 against the pulley member 1a (movable sieve) against the biasing force of the spring 10. This reduces the distance between the pulley members (movable sieve and fixed sieve), namely, changes the speed ratio.

Since this centrifugal roller type driving mechanism is configured to indirectly drive the movable sieve with the centrifugal roller by moving the centrifugal roller under centrifugal force, if, for example, the centrifugal roller is caught on something, the movable sieve cannot be driven with high accuracy, which will in turn make it difficult to change the speed ratio to an optimum level corresponding to the rpm of the engine, thus making it difficult to improve fuel economy. To avoid this problem, the below-identified Patent documents 2 and 3 proposes to directly drive the movable sieve not with a centrifugal roller but with a motor-driven actuator.

The continuously variable transmission disclosed in Patent document 2 is configured, as shown e.g., in Fig. 1 of Patent document 2, such that when the rotary shaft 102a of the motor 102 rotates about its axis, the nut member 107 rotates, thus axially displacing the threaded shaft 111 which is in threaded engagement with the nut member 107. The displacement of the threaded shaft 111 in turn causes the pressing member 117 to be displaced in the same direction as the threaded shaft 111, thus rotating the fork member 300 in a predetermined direction such that the fork member 300 is pressed against the movable sieve 207, thus moving the movable sieve 207 toward the fixed sieve 203.

The continuously variable transmission disclosed in Patent document 3 is configured, as shown in e.g., in Fig. 4 of Patent document 3, such that when the output shaft 91 of the actuator unit 90 is driven, the arm member 120 advances or retracts in the axial direction of the output shaft 91, thereby moving the movable pulley member 62. The arm member 120 is coupled to the output shaft 91 of the actuator unit 90 through a coupling member 130.

### PRIOR ART DOCUMENTS

### PATENT DOCUMENTS

Patent document 1: JP Patent Publication 2004-257458A
Patent document 2: JP Patent Publication 2009-79759A
Patent document 3: JP Patent 5241642B

### SUMMARY OF THE INVENTION

### OBJECT OF THE INVENTION

In the device of Patent document 2, since the threaded shaft 111 is used to drive the movable sieve in the axial direction, it is necessary to use an anti-rotation arrangement in order to allow only relative axial movement of the threaded shaft 111 in the threaded shaft chamber 101b, while prohibiting relative rotation (see paragraph 0046 of Patent document 2). The anti-rotation arrangement complicates the structure of the actuator. Since the movable sieve is driven by rotating the nut member 107, the moment when the nut member 107 rotates acts on a member or members supporting the nut member, and thus could shorten the life of such a member or members.

In the arrangement of Patent document 3, the actuator unit 90 and the arm member 120 have to be attached and detached every time the transmission is assembled, or when replacing its parts.

An object of the present invention is to provide an actuator of the above-described type which is simple in structure, can be easily assembled and disassembled, and which can be operated stably for a prolonged period of time.

### MEANS FOR ACHIEVING THE OBJECT

In order to achieve this object, the present invention provides an actuator for a continuously variable transmission, the transmission comprising a pulley including a fixed sieve and a movable sieve; and the actuator configured to axially move the movable sieve toward and away from the fixed sieve, wherein the actuator comprises:
a rotary member configured to rotate under a driving force of a motor;
an output member configured to be axially displaced when the rotary member rotates;
a guide member configured to axially guide the output member, while preventing rotation of the output member about the axis of the output member; and
an arm fixed to the output member, and connected to the movable sieve so as to be rotatable relative to the movable sieve, and so as to be capable of transmitting first and second loads that tend to move the movable sieve in respective opposite axial directions of the movable sieve.

Since the output member is guided by the guide member so as not to be rotatable about its axis, it is not necessary to provide a separate anti-rotation member, which makes it possible to simplify the structure of the actuator. Since the arm is fixed to the output member, the actuator can be easily assembled and disassembled. Since the guide member receives the moment that tends to rotate the output member, the moment will not act on members around the output member. This extends the life of the members around the output member, and thus makes it possible to stably operate the actuator for a prolonged period of time.

The output member may include a displacement member receiving the rotary member, and a coupling member fixed to the displacement member so as to be guided by the guide member, and connected to the arm.

Preferably, the rotary member is a ball-screw shaft, and the displacement member is a ball-screw nut. By using a ball-screw shaft as the rotary member and using a ball-screw nut as the displacement member, it is possible, by turning on and off the motor, to convert the rotary motion of the rotary member to a linear motion of the displacement member with high accuracy, and also to stop the displacement member at an intended position within the range of the linear motion, with high accuracy.

Preferably, the actuator further comprises one of a planetary speed reducer and a parallel-shaft type speed reducer configured to transmit, after reducing, rotation of the motor to the rotary member. By using either of these speed reducers, it is possible to smoothly change the speed ratio with the pulley by rotating the rotary member about its axis at a suitable speed.

Preferably, the coupling member is fixed to the arm by a press-fitted pin. With this arrangement, it is possible to prepare the coupling member and the arm separately from each other, and to couple them together by the press-fitted pin when assembling the actuator, and thus to smoothly assemble and disassemble the actuator.

Preferably, a double-row angular ball bearing, a deep groove ball bearing, or a plurality of such bearings is provided between the movable sieve and the arm. Such a bearing or bearings make it possible to rotate the movable sieve about its axis while pressing the movable sieve toward the fixed sieve with the arm. The number of such a ball bearing or bearings is preferably one or two, but is not limited.

Preferably, the rotary member is supported by a four-point contact ball bearing, a deep groove ball bearing, or a plurality of such bearings. Such a bearing or bearings make it possible to stably rotate the rotary member about its axis. The number of such a bearing or bearings is preferably one or two, but is not limited.

Preferably, a lubricant layer is formed on at least one of a sliding surface of the coupling member that is in sliding contact with the guide member, and a sliding surface of the guide member that is in sliding contact with the coupling member. If the frictional force between the sliding surfaces is large, it may become difficult to smoothly move the movable sieve toward and away from the fixed sieve, or wear dust produced due to wear of the sliding surfaces may enter a gap between the rotary member and the displacement member, thus shortening the life of the actuator. By forming a lubricant layer on at least one of the above sliding surfaces, the frictional force therebetween decreases, so that the movable sieve can be smoothly moved toward and away from the fixed sieve, and also, the life of the actuator increases.

Instead of forming a lubricant layer, at least one of the coupling member and the guide member may be formed of a resin. In this arrangement too, since a resin has a higher solid lubricity than non-resin materials such as metal, the movable sieve can be moved toward and away from the fixed sieve as smoothly as when the lubricant layer is formed on at least one of the sliding surfaces.

By using the above-described actuator in a continuously variable transmission, it is possible to change the speed ratio to an optimum level corresponding to the rpm of the engine, and thus to improve fuel economy.

### ADVANTAGES OF THE INVENTION

The actuator according to the present invention, which is used to move the movable sieve of the pulley of a continuously variable transmission toward and away from the fixed sieve of the pulley, includes a rotary member configured to rotate about its axis under the driving force of a motor; a displacement member provided at the rotary member, and configured to be axially displaced by an amount corresponding to the amount of rotation of the rotary member; a coupling member mounted to the displacement member; a guide member configured to axially guide the coupling member, while preventing rotation of the coupling member about its axis; and an arm fixed to the coupling member, and configured to bias the movable sieve toward the fixed sieve.

With this arrangement, since the coupling member, to which the displacement member is mounted, is guided by the guide member so as to be not rotatable about its axis, it is not necessary to separately provide a member for rotationally fixing the coupling member, so that it is possible to simplify the structure of the actuator. Since the arm is fixed to the coupling member, the actuator can be easily assembled and disassembled. Since the guide member receives the moment that tends to rotate the displacement member (and the coupling member), the moment will not act on members around the displacement member (and the coupling member). This prolongs the life of the members around the displacement member (and the coupling member), and thus makes it possible to stably operate the actuator for a prolonged period of time.

### BRIEF DESCRIPTION OF THE DRAWINGS

Fig. 1 is a vertical sectional view of a continuously variable transmission embodying the present invention.
Fig. 2A is a front view of a coupling member used in an actuator of the continuously variable transmission shown in Fig. 1.
Fig. 2B is a left side view of Fig. 2A.
Fig. 2C is a right side view of Fig. 2A.
Fig. 2D is a plan view of Fig. 2A.
Fig. 3 is a vertical sectional view of a ball-screw nut with the coupling member shown in Fig.2A fixed thereto.
Fig. 4A is a bottom view of a guide member used in the actuator of the continuously variable transmission shown in Fig. 1.
Fig. 4B is a sectional view taken along line b-b of Fig. 4A.

### BEST MODE FOR EMBODYING THE INVENTION

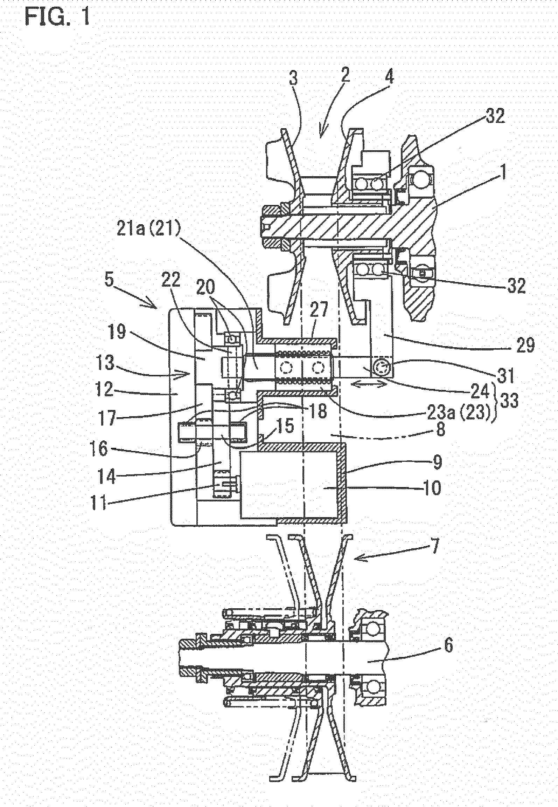

Fig. 1 shows a vertical sectional view of a continuously variable transmission according to the present invention. This continuously variable transmission includes, as main components, a driving shaft 1 connected to an output shaft of an engine; a driving pulley 2 constituted by a fixed sieve 3 and a movable sieve 4, and mounted on the driving shaft 1; an actuator 5 configured to move the fixed sieve 3 and the movable sieve 4 of the driving pulley 2 toward and away from each other; a driven shaft 6 configured to transmit power to a wheel; a driven pulley 7 mounted on the driven shaft 6; and a transmission belt 8 configured to transmit torque from the driving pulley 2 to the driven pulley 7.

The fixed sieve 3 and movable sieve 4 of the driving pulley 2 are respectively formed with tapered surfaces opposed to each other, and configured such that by axially moving the movable sieve 4 toward and away from the fixed sieve 3, thereby changing the distance between the sieves 3 and 4, the turning radius of the portion of the transmission belt 8 wound around the driving pulley 2 is continuously variable.

The actuator 5 is now described in detail. A motor 10 is mounted in a motor case 9 of the continuously variable transmission. The motor 10 includes an output shaft carrying an output gear 11 meshing with a first gear 14 of a parallel-shaft type speed reducer 13 mounted in a speed reducer case 12. The first gear 14 is mounted on a rotary shaft 15. The parallel-shaft type speed reducer 13 includes, besides the first gear 14, a second gear 16 mounted on the rotary shaft 15, and a third gear 17 meshing with the second gear 16. The first gear 14, second gear 16, and third gear 17 are all spur gears. The rotary shaft 15, on which are mounted the first gear 14 and the second gear 16, is supported by shell bearings 18 so as to be rotatable about the axis of the rotary shaft 15.

A retaining shaft member 19 is fitted in the center of the third gear 17. The retaining shaft member 19 is supported by two four-point contact ball bearings 20 so as to be rotatable about the axis of the retaining shaft member 19. Deep groove ball bearings may be used instead of the four-point contact ball bearings 20. The retaining shaft member 19 may be supported, not by two bearings, but by a single bearing. A ball-screw shaft 21a as a rotary member 21 is fitted in the end of the retaining shaft member 19 opposite from its end fitted in the third gear 17. A fixing member 22 is inserted through the ball-screw shaft 21a to extend in a direction perpendicular to the axial direction of the ball-screw shaft 21a such that the retaining shaft member 19 and the ball-screw shaft 21a rotate together with each other about their axis.

The ball-screw shaft 21a supports a ball-screw nut 23a as a displacement member 23. The ball-screw shaft 21a has an outer peripheral surface formed with an external thread groove, while the ball-screw nut 23a has an inner peripheral surface formed with an internal thread groove which is equal in pitch to the pitch of the external thread groove. A plurality of balls is received between the external thread groove and the internal thread groove. A circulation path (not shown) extends through the ball-screw nut 23a from one to the other end of the ball-screw nut 23a to communicate with the internal thread groove and the external thread groove at the ends of the ball-screw nut 23a. When the ball-screw shaft 21a rotates, the balls circulate through the gap between the external thread groove and the internal thread groove, and the circulation path, causing the ball-screw nut 23a to be axially displaced relative to the ball-screw shaft 21a.

By using a ball-screw shaft 21a as the rotary member 21, and a ball-screw nut 23a as the displacement member 23, it is possible to translate a rotary motion into a linear motion, while making it possible to stop the displacement member 23 at a desired position with high accuracy. However, instead of a ball-screw shaft 21a and a ball-screw nut 23a, a slide screw and a slide nut may be used as the rotary member 21 and the displacement member 23, respectively.

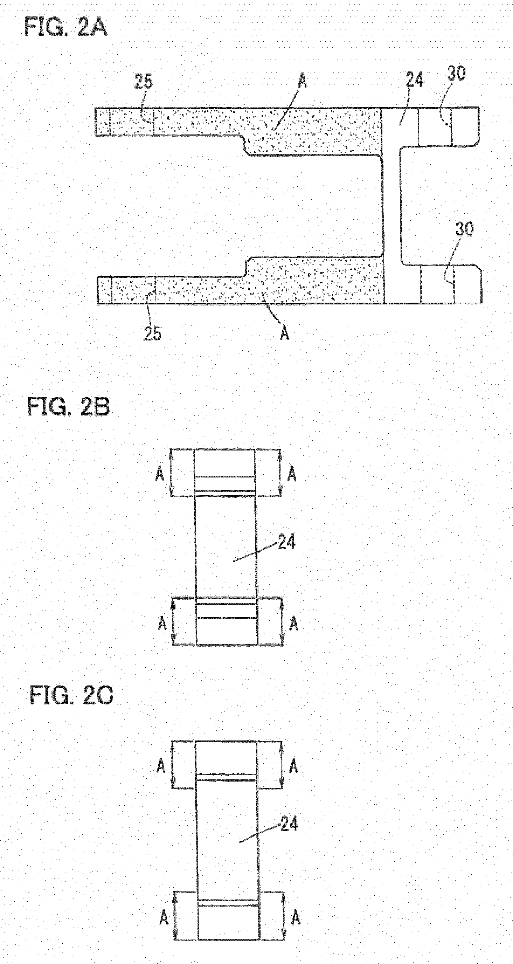

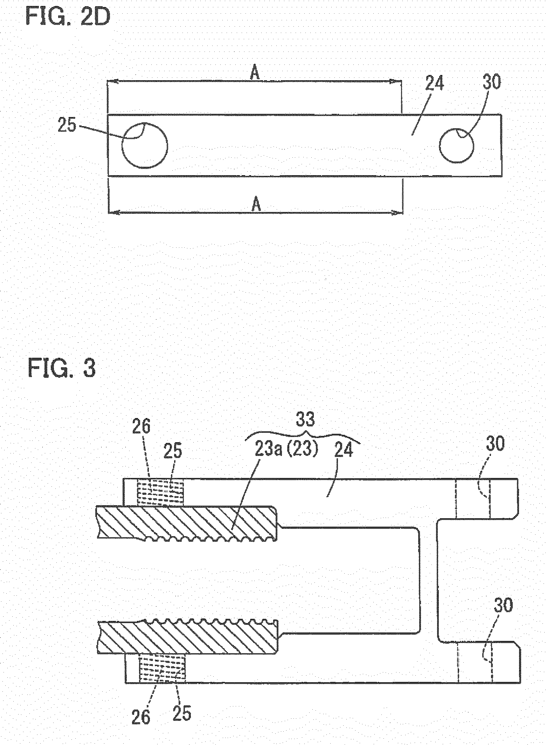

A coupling member 24 shown in Figs. 2A to 2D is fixed to the ball-screw nut 23a. The coupling member 24 is an H-shaped plate. As shown in Fig. 3, the ball-screw nut 23a is fixed to the coupling member 24 by screws 26 threaded into threaded holes 25 formed in the coupling member 24. The ball-screw nut 23a and the coupling member 24 form an output member 33 which transmits the driving force generated by the motor 10 to the pulley 2.

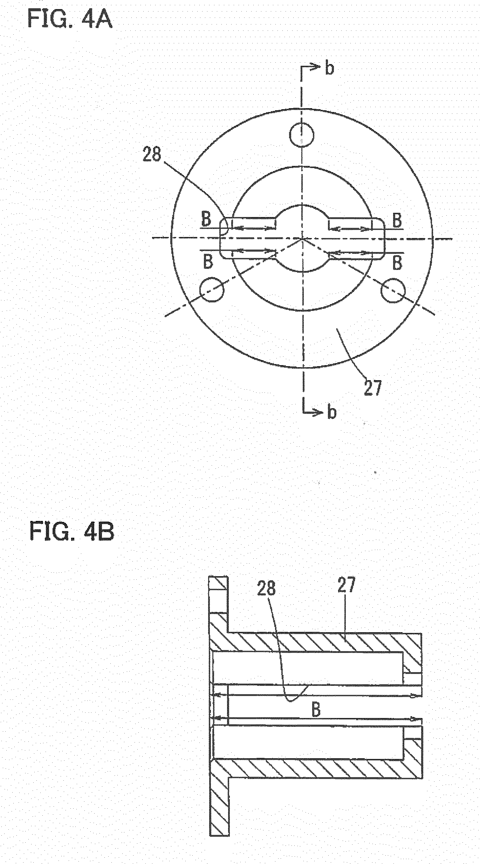

The coupling member 24 is fitted in a cutout groove 28 formed in a guide member 27 shown in Figs. 4A and 4B. The guide member 27 is fixed to the speed reducer case 12. When the ball-screw shaft 21a is rotated about its axis by the motor 10, since the ball-screw nut 23a is fixed to the coupling member 24, and the coupling member 24 is fitted in the guide member 27, which is fixed to the speed reducer case 12, the ball-screw shaft 21a and the ball-screw nut 23a rotate relative to each other about their axis such that the ball-screw nut 23a moves axially forward or rearward (as shown by the arrow in Fig. 1), while not rotating relative to the speed reducer case 12 about the axis of the ball-screw nut 23a.

The coupling member 24 is fixed to one end portion of an arm 29 by means of a single press-fitted pin 31 press-fitted in pin holes 30 formed in the coupling member 24 and a pin hole formed in the arm 29. By fixedly coupling together the coupling member 24 and the arm 29 beforehand with the press-fitted pin 31, the actuator can be easily and smoothly assembled and disassembled.

At the other end portion of the arm 29, a double-row angular ball bearing 32 is provided as a release bearing for the driving pulley 2 such that the movable sieve 4 is biased toward the fixed sieve 3 by the arm 29 via the bearing 32. By disposing the bearing 32 between the arm 29 and the movable sieve 4, the arm 29 can apply a biasing force to the movable sieve 4, which rotates about its axis, even though the arm 29 is not rotatable relative to the movable sieve 4. Instead of a double-row angular ball bearing, one or two deep groove ball bearings may be used.

A solid lubricant-treated layer (Defric coating layer) as a lubricant layer is formed on at least either the portions of the coupling member 24 indicated by the hatching in Fig. 2A and the arrows in Figs. 2B to 2D (portions designated by the letter "A"), or the portions of the guide member 27 indicated by the arrows in Figs. 4A and 4B (portions designated by the letter "B"). The solid lubricant-treated layer is lower in friction coefficient and higher in wear resistance than the materials forming the coupling member 24 and the guide member 27, and thus reduces resistance due to friction between the sliding parts. That is, the solid lubricant-treated layer allows the movable sieve 4 to be smoothly moved toward and away from the fixed sieve 3.

However, instead of forming the lubricant layer, at least one of the coupling member 24 and the guide member 27 may be formed of a resin. With this arrangement too, since a resin has a higher solid lubricity than non-resin materials such as metal, the movable sieve 4 can be moved toward and away from the fixed sieve 3 as smoothly as when the lubricant layer is formed on at least one of the sliding surfaces. Such a resin may be fluororesin, which has high sliding properties and is heat-resistant.

The above-described embodiment is a mere example, and the elements of the actuator 5 may be altered in shape, arrangement, material, etc., as long as the object of the present invention is achieved, that is, as long as the actuator 5 is simple in structure, can be easily assembled and disassembled, and can be operated stably for a prolonged period of time.

### DESCRIPTION OF THE NUMERALS

- 1.: Driving shaft
- 2.: Driving pulley (pulley)
- 3.: Fixed sieve
- 4.: Movable sieve
- 5.: Actuator
- 6.: Driven shaft
- 7.: Driven pulley
- 8.: Transmission belt
- 9.: Motor case
- 10.: Motor
- 11.: Output gear
- 12.: Speed reducer case
- 13.: Parallel-shaft type speed reducer (speed reducer)
- 14.: First gear
- 15.: Rotary shaft
- 16.: Second gear
- 17.: Third gear
- 18.: Shell bearing
- 19.: Retaining shaft member
- 20.: Four-point contact ball bearing (bearing)
- 21.: Rotary member
- 21a.: Ball-screw shaft
- 22.: Fixed member
- 23.: Displacement member
- 23a.: Ball-screw nut
- 24.: Coupling member
- 25.: Threaded hole
- 26.: Screw
- 27.: Guide member
- 28.: Cutout groove
- 29.: Arm
- 30.: Pin hole
- 31.: Press-fitted pin
- 32.: Double-row angular ball bearing (bearing)
- 33.: Output member

## Claims

1. An actuator (5) for a continuously variable transmission, the transmission comprising a pulley (2) including a fixed sieve (3) and a movable sieve (4); and the actuator (5) configured to axially move the movable sieve (4) toward and away from the fixed sieve (3),
**characterized in that** the actuator (5) comprises:
a rotary member (21) configured to rotate under a driving force of a motor (10);
an output member (33) configured to be axially displaced when the rotary member (21) rotates;
a guide member (27) configured to axially guide the output member (33),
while preventing rotation of the output member (33) about an axis of the output member (33); and
an arm (29) fixed to the output member (33), and connected to the movable sieve (4) so as to be rotatable relative to the movable sieve (4), and so as to be capable of transmitting first and second loads that tend to move the movable sieve (4) in respective opposite axial directions of the movable sieve (4).

2. The actuator of claim 1, wherein the output member (33) includes a displacement member (23) receiving the rotary member (21), and a coupling member (24) fixed to the displacement member (23) so as to be guided by the guide member (27), and connected to the arm (29).

3. The actuator of claim 1 or 2, wherein the rotary member (21) is a ball-screw shaft (21a), and the displacement member (23) is a ball-screw nut (23a).

4. The actuator of any of claims 1 to 3, further comprising one of a planetary speed reducer and a parallel-shaft type speed reducer (13) configured to transmit, after reducing, rotation of the motor (10) to the rotary member (21).

5. The actuator of any of claims 1 to 4, wherein the coupling member (24) is fixed to the arm (29) by a press-fitted pin (31).

6. The actuator of any of claims 1 to 5, wherein one of a double-row angular ball bearing (32) and a deep groove ball bearing is provided between the movable sieve (4) and the arm (29).

7. The actuator of any of claims 1 to 6, wherein the rotary member (21) is supported by one of a four-point contact ball bearing (20), and a deep groove ball bearing.

8. The actuator of any of claims 1 to 7, wherein a lubricant layer is formed on at least one of a sliding surface of the coupling member (24) that is in sliding contact with the guide member (27), and a sliding surface of the guide member (27) that is in sliding contact with the coupling member (24).

9. The actuator of any of claims 1 to 7, wherein at least one of the coupling member (24) and the guide member (27) is formed of a resin.

10. A continuously variable transmission in which the actuator of any of claims 1 to 9 is configured to move the movable sieve (4).
